(19) **Europäisches Patentamt**

**European Patent Office**

**Office européen des brevets**

(11) **EP 0 521 123 B2**

(12) **NEUE EUROPÄISCHE PATENTSCHRIFT**

(45) Veröffentlichungstag und Bekanntmachung des Hinweises auf die Entscheidung über den Einspruch:
**18.07.2001   Patentblatt 2001/29**

(45) Hinweis auf die Patenterteilung:
**22.10.1997   Patentblatt 1997/43**

(21) Anmeldenummer: **92902914.8**

(22) Anmeldetag: **20.01.1992**

(51) Int Cl.⁷: **H04B 7/08**

(86) Internationale Anmeldenummer:
**PCT/EP92/00104**

(87) Internationale Veröffentlichungsnummer:
**WO 92/13399 (06.08.1992 Gazette 1992/21)**

(54) **ANTENNENDIVERSITY-ANLAGE MIT MINDESTENS ZWEI ANTENNEN FÜR DEN MOBILEN EMPFANG VON METER- UND DEZIMETERWELLEN**

AERIAL DIVERSITY INSTALLATION WITH AT LEAST TWO AERIALS FOR THE MOBILE RECEPTION OF METRE AND DECIMETRE WAVES

INSTALLATION DE RECEPTION EN DIVERSITE COMPRENANT DEUX ANTENNES POUR LA RECEPTION MOBILE D'ONDES METRIQUES ET DECIMETRIQUES

(84) Benannte Vertragsstaaten:
**AT CH ES FR GB IT LI NL SE**

(30) Priorität: **21.01.1991   DE 4101629**

(43) Veröffentlichungstag der Anmeldung:
**07.01.1993   Patentblatt 1993/01**

(73) Patentinhaber: **FUBA Automotive GmbH
31162 Bad Salzdetfurth (DE)**

(72) Erfinder:
• **LINDENMEIER, Heinz
  W-8033 Planegg (DE)**
• **HOPF, Jochen
  W-8013 Haar (DE)**
• **REITER, Leopold
  W-8031 Gilching (DE)**
• **KRONBERGER, Rainer
  W-8012 Ottobrunn (DE)**

(74) Vertreter: **Liska, Horst, Dr.-Ing. et al
Weickmann & Weickmann
Patentanwälte
Postfach 860 820
81635 München (DE)**

(56) Entgegenhaltungen:
**EP-A- 350 007          WO-A-89/11185
DE-A- 2 017 869          DE-A- 3 517 247
DE-A- 3 926 336          GB-A- 21 211 650
US-A- 4 733 402**

EP 0 521 123 B2

**Beschreibung**

Die Erfindung betrifft eine Antennendiversity-Anlage mit mindestens zwei Antennen für den mobilen Empfang von Meter- und Detimeterwellen nach dem Oberbegriff des Anspruchs 1.

Durch Mehrwegeausbreitung werden beim mobilen Rundfunk- und Fernsehempfang erhebliche Empfangsstörungen verursacht, die im Falle des Tonrundfunkempfangs durch Aufrauschen und ausgeprägte Verzerrungen des niederfrequenten Signals den Hörgenuß stark beeinträchtigen und im Falle des Fernsehempfangs durch Geisterbilder, Bildflattern, Farbfading, Verlust der Synchronisation und Bildausfall störend in Erscheinung treten. Solche Empfangsstörungen beeinträchtigen in erheblichem Maße die Empfangsqualität; sie sind daher zu vermeiden.

Aus der deutschen Patentanmeldung DE-A-35 17 247 ist eine Antennendiversity-Anlage zur Elimination von Empfangsstörungen beim frequenzmodulierten UKW-Tonrundfunk bekannt. Hierbei werden einem Diversity-Prozessor mindestens zwei Antennensignale zugeführt, wobei im Diversity-Prozessor eine Frequenzhubschwelle und eine Amplitudenschwelle enthalten sind, mit denen jeweils die aktuell störungsbedingten Frequenzstörhubpulse bzw. die störungsbedingten Amplitudeneinbrüche im Zwischenfrequenzsignal, das dem Diversity-Prozessor aus dem Empfänger zugeführt wird, verglichen werden. Überschreiten die Störungen die Schwellen, wird ein Umschaltvorgang eingeleitet, derart, daß ein anderes Antennensignal oder eine andere aus den Antennensignalen abgeleitete lineare Kombination dem Tuner mit ZF-Teil zugeführt wird.

Eine Antennendiversity-Anlage zur Vermeidung von Bildstörungen beim mobilen Empfang von Fernsehsignalen im Meter- und Dezimeterwellenbereich wird in der deutschen Patentanmeldung DE-A-39 26 336 (veröffentlicht am 14.02.91) angegeben. Diese Antennendiversity-Anlage umfaßt einen Diversity-Prozessor mit N Antennensignaleingängen una einen Fernsehempfänger, wobei dem Diversity-Prozessor das Videosignal sowie die horizontalen und vertikalen Synchronsignale zugeführt werden. Im Diversity-Prozessor ist eine Zeittorschaltung enthalten, die durch die horizontalen Synchronimpulse während der horizontalen Austastzeit geöffnet wird, wodurch das Videosignal zur Signalqualitätsbewertung durchgeschaltet wird. Über eine Steuerschaltung wird ein Adreßsignal bei einer sich anbahnenden Bildstörung erzeugt, derart, daß über einen Antennencombiner ein neues Antennensignal oder eine andere aus den Antennensignalen abgeleitete lineare Kombination dem Fernsehempfänger zugeführt wird.

Jede der in den oben genannten Patentanmeldungen beschriebenen Diversity-Anlagen löst die Aufgabe, die durch Mehrwegeausbreitung verursachten Empfangsstörungen in einem Ton- oder einem Fernsehkanal zu reduzieren. Möchte man jedoch in einem Fahrzeug neben dem Fernsehbild auch den Fernsehton verbessern, so setzt dies nach dem Stand der Technik separate Antennen und damit auch separate Antennendiversity-Anlagen sowohl für den Fernsehempfang als auch für den Tonempfang voraus. Denn bei Anwendung der in DE-A-39 26 336 angegebenen Lösung werden die Bildstörungen beim mobilen Empfang vermieden, nicht jedoch die Tonstörungen des dazugehörigen Fernsehtons. Dies liegt zum einen darin begründet, daß das Fernsehbild in spezieller Weise amplitudenmoduliert ist, während der Fernsehton frequenzmoduliert ist und die Kriterien zur Feststellung der Bildqualität prinzipiell völlig anders geartet sind als die Kriterien zur Feststellung einer Tonstörung. Zum andern bedingt der Frequenzabstand von 5.5 MHz zwischen Bild- und Tonträger, daß bei einem derartig großen Frequenzabstand die Empfangsverhältnisse am Ort einer Empfangsantenne für Bild- und Tonträger völlig unterschiedlich sind mit der Folge, daß z. B. die Bildstörung maximal und die Tonträgerstörung gleichzeitig minimal sein kann.

Dies bedeutet, daß bei Anwendung der oben genannten Lösungen nach dem Stand der Technik mindestens vier Antennen am Fahrzeug angebracht sein müssen. Um jedoch eine deutliche Verbesserung des Empfangs zu erhalten, wird in der Literatur eine Anzahl von vier Antennen pro Diversityeinrichtung empfohlen mit der Folge, daß nach dem Stand der Technik bereits acht Antennen am Fahrzeug montiert werden müssen, um Bild- und Tonstörungen während der Fahrt effizient zu eliminieren. Wollte man den in zwei durch eine Frequenzlücke getrennten Bändern übertragenen Stereofernsehton ebenfalls durch Antennendiversity verbessern, müßte man demzufolge mindestens 12 Antennen am Fahrzeug anbringen. Berücksichtigt man weiter die enorme abzudeckende Frequenzbandbreite von ca. 40 bis 860 MHz, so kommt erschwerend hinzu, daß mit einer einzelnen Antenne dieser große Frequenzbereich schwierig abzudecken ist, so daß die benötigte Antennenzahl durch Verwendung von Bereichsantennen noch weiter ansteigt. Eine solche Vielzahl von Antennen läßt sich aber an modernen Kraftfahrzeugen nicht unterbringen.

Schließlich ist aus DE 2 017 869 A eine Antennen-Diversity-Anlage für eine Gruppe stationärer Richtantennen bekannt, bei welcher ein Betriebsempfänger mittels eines Diodenschalters wahlweise mit einer der Richtantennen verbunden werden kann. Mit welcher der Richtantennen der Betriebsempfänger zu verbinden ist, bestimmt ein zusätzlicher Suchempfänger, der über einen weiteren Diodenschalter zyklisch mit den einzelnen Richtantennen verbindbar ist und mittels einer Signalbewertungsschaltung die Richtantenne mit optimalen Empfangsbedingungen auswählt, mit welcher nachfolgend der Betriebsempfänger zu verbinden ist. Aus DE 2 017 869 ist es ferner bekannt, mehreren auf unterschiedliche Empfangsfrequenzen abgestimmten Betriebsempfängern einen gemeinsamen Suchempfänger zuzuordnen, der für diese Betriebsempfänger der Reihe nach die jeweils optimal empfangende Richtantenne bestimmt.

Aus dem Katalog der Firma WISI Wilhelm Sihn jr. KG "Satelliten-Empfang mit System, Katalog-Nummer 902" 1990 Seiten 15, 17 und 20 ist eine stationäre Satellitenempfangsanlage bekannt, bei welcher mehrere Satellitenantennen über Antennenverteiler und Koaxialumschalter mit mehreren Empfangsgeräten verbunden sind, derart, daß jedes Empfangsgerät wählbar mit jeder Satellitenantenne verbunden werden kann.

Aufgabe der Erfindung ist es deshalb, eine Antennendiversity-Anlage für den mobilen Empfang von Meter- und Dezimeterwellen anzugeben, die es mit einer nicht zu großen Zahl von Antennen ermöglicht, ein und denselben Satz von Antennen zur Versorgung von zwei oder mehr Tunern, von denen jeder unterschiedliche Empfangsanforderungen besitzt, zu verwenden, wobei gewährleistet sein soll, daß sich jeweils für jeden Tuner die für ihn günstigsten Diversity-Empfangsverhältnisse einstellen lassen und die Antennendiversity-Anlage zur Verbesserung des Fernseh- und Tonempfangs im Meter- und Dezimeterwellenbereich in Kraftfahrzeugen verwendet werden kann.

Diese Aufgabe wird bei einer gattungsgemäßen Anlage durch die kennzeichnenden Merkmale des Anspruchs 1 gelöst.

Die mit der Erfindung erzielbaren Vorteile bestehen in der erheblichen Reduzierung der Antennenzahl für Antennendiversity-Anlagen, deren Tuner für ganz unterschiedliche Empfangsanforderungen eingesetzt werden. So reicht bei erfindungsgemäßer Ausbildung ein Satz von z. B. vier Antennen aus, um sowohl die Empfangsstörungen des Stereofernsehtons und des Fernsehbildes als auch die Empfangsstörungen beim UKW-Rundfunk zu unterdrücken. Dadurch wird überhaupt erst die Möglichkeit in einem Kraftfahrzeug geschaffen, mehrere Diversity-Einrichtungen gleichzeitig zu betreiben. Bekanntermaßen würde eine große Anzahl von Antennen bei der heutigen Kompaktbauweise moderner Kraftfahrzeuge gar nicht mehr auf oder am Fahrzeug untergebracht werden können, von der Schwierigkeit der Verkabelung und den enormen Kosten einmal ganz abgesehen. Die erfindungsgemäße Antennendiversity-Anlage besitzt beim Fernsehbild- und Tonempfang den weiteren Vorteil, daß durch den kompakten Aufbau z. B. der Oszillator des Bildtuners auch für den Tontuner verwendet werden kann, wodurch wiederum Kosten eingespart werden können.

Ausführungsbeispiele der Erfindung werden an Hand der folgenden Figuren näher erläutert:

Fig. 1: Erfindungsgemäße Antennendiversity-Anlage, bestehend aus einem Antennenverteiler, zwei Antennenumschaltern, zwei Tunern sowie zwei Diversity-Prozessoren

Fig. 2: Antennenverteiler in einer Antennendiversity-Anlage nach Fig. 1, bestehend aus passiven Netzwerken

Fig. 3: Antennenverteiler in einer Antennendiversity-Anlage nach Fig. 1, bestehend aus aktiven Schaltungen

Fig. 4: Antennenverteiler in einer Antennendiversity-Anlage nach Fig. 1, bestehend aus aktiven Schaltungen und passiven Netzwerken

Fig. 5: Antenner verteiler in einer Antennendiversity-Anlage nach Fig. 1, bestehend aus aktiven und passiven Netzwerken zur Signalaufteilung und Netzwerken zur Bildung von Linearkombinationen

Fig. 6: Antennendiversity-Anlage zur Vermeidung von Empfangsstörungen beim Empfang des Stereofernsehtons und des Fernsehbildes

Fig. 7.: Antennendiversity-Anlage zur Vermeidung von Empfangsstörungen beim Empfang des Stereofernsehtons und des Fernsehbildes sowie eines UKW-Rundfunkkanals

Fig. 8: Mitbenutzung des Oszillatorsignals des Bildtuners für den Empfang des dazugehörigen Fernsehtons eines Femsehkanals

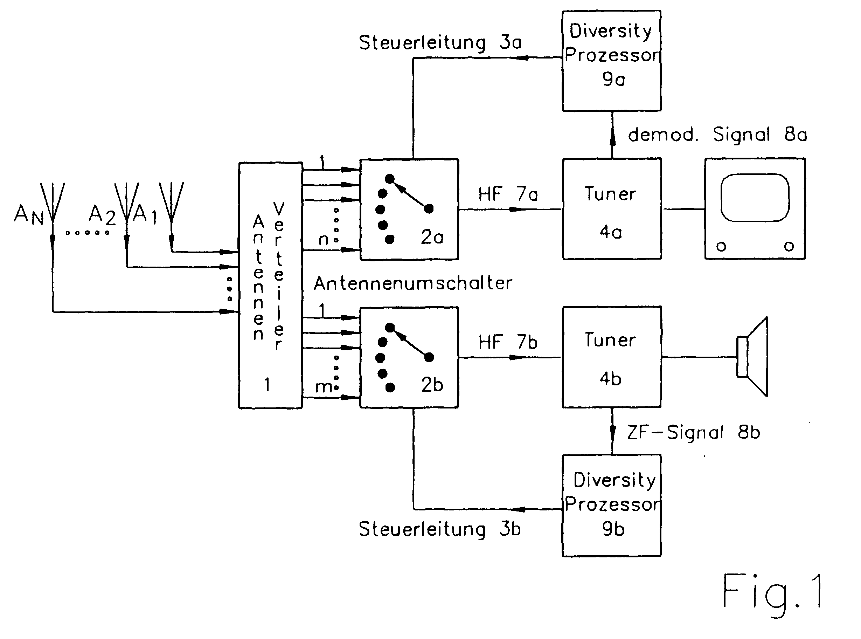

In Fig. 1 ist eine erfindungsgemäße Antennendiversity-Anlage dargestellt. Sie besteht aus einem Satz von N Antennen $A_1$ bis AN, die den Eingängen des Antennenverteilers 1 zugeführt sind. Die Ausgänge des Antennenverteilers führen die Antennensignale und sind den zwei Antennenumschaltern 2a und 2b zugeführt. In den Antennenumschaltern wird jeweils mittels einer Steuerleitung 3a bzw. 3b jeweils ein Ausgangssignal des Antennenverteilers 1 ausgewählt und zum Tuner 4a bzw. 4b durchgeschaltet. Der Tuner 4a ist, wie in Fig. 1 dargestellt, ein Fernsehbildtuner. Im Tuner 4a wird das HF-Signal 7a auf eine Zwischenfrequenz umgesetzt und demoduliert, so daß dessen Videosignal und ggfs. weitere Signale als demoduliertes Signal 8a einem Diversity-Prozessor zugeführt werden können. Im Diversity-Prozessor wird in bekannter Weise, z. B. über eine Zeittorschaltung (s. DE-A-39 26 336), in der horizontalen Austastzeit die aktuelle Bildqualität mit einer Schwelle verglichen und bei Bedarf die Steuerleitung 3a so gesetzt, daß der Antennenumschalter 2a veranlaßt wird, auf ein anderes Ausgangssignal des Antennenverteilers 1 umzuschalten. Auf diese Weise wird sichergestellt, daß immer das jeweils mit der besten Bildqualität zur Verfügung stehende HF-Signal zum Tuner 4a durchgeschaltet ist.

Der Tuner 4b in Fig. 1 ist auf den Fernsehton des gleichen Fernsehkanals abgestimmt. Das frequenzmodulierte, noch nicht begrenzte ZF-Signal wird dem Diversity-Prozessor 9b zugeführt. Im Diversity-Prozessor werden die störungsbedingten Frequenzstörhubspitzen und die Amplitudeneinbrüche in bekannter Weise (s. DE-A-35 17 247) mit Schwellen verglichen. Bei einer Tonstörung wird der Antennenumschalter 2b über die Steuerleitung 3b veranlaßt, ein besseres Fernsehtonsignal zum Tuner 4b durchzuschalten. Mit Hilfe einer solchen Antennendiversity-Anlage wird unabhängig voneinander sichergestellt, daß zu jedem Zeitpunkt sowohl das Fernsehbild als auch der dazugehörige Fernsehton jeweils am wenigsten gestört ist, dadurch, daß der jeweilige Tuner unabhängig von den andern Tunern auf alle zur Verfügung stehenden Antennensignale zugreifen kann.

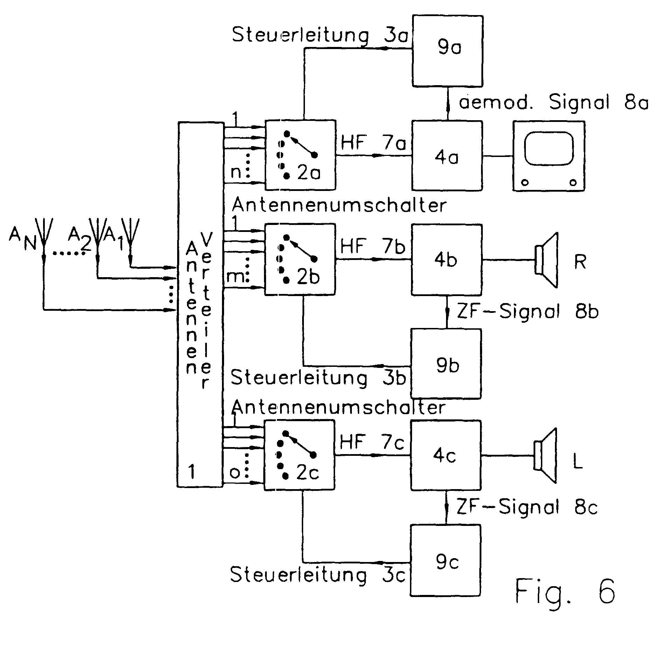

Durch Einführung des Stereotons bzw. des Zweikanaltons beim Fernsehen, deren Tonträger einen Abstand von 242 kHz aufweisen, wird ein weiterer Tuner 4c erforderlich (s. Fig. 6), da bei diesem Frequenzabstand, der größer als der Kanalabstand beim UKW-Rundfunk ist, die Empfangssignale am Ort der Antennen bereits deutlich unterschiedlichen Verlauf über der Zeit aufweisen, wie Messungen zeigen. Auch für den zweiten Tonkanal wird die Tonstörung nach den beschriebenen Verfahren beseitigt.

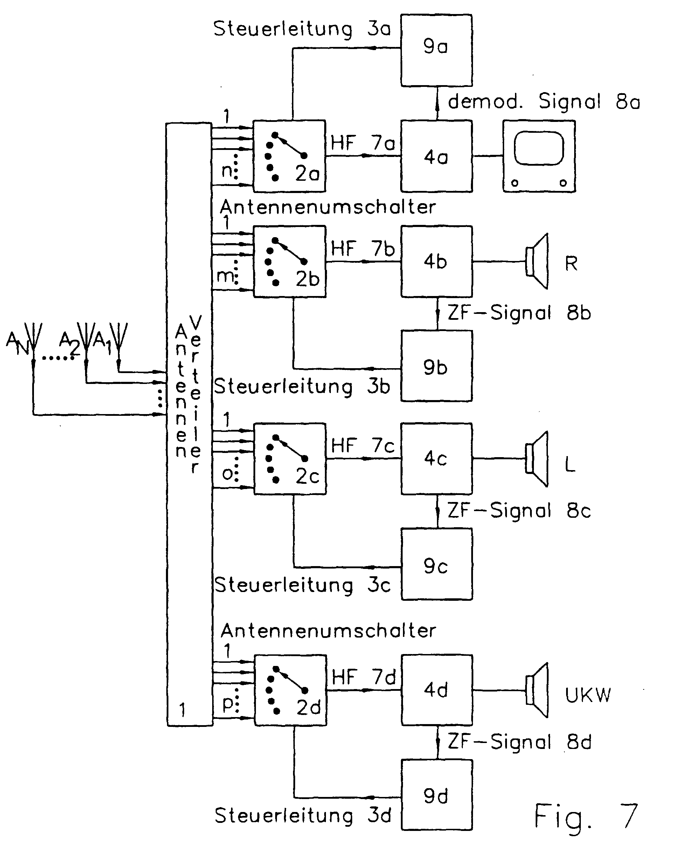

Ein weiterer Vorteil bei erfindungsgemäßen Antennendiversity-Anlagen besteht darin, daß z. B. bei Luxuslimousinen neben der Möglichkeit des Fernsehempfangs mit Stereoton auch noch UKW-Rundfunkempfang mit demselben Satz von Antennensignalen ermöglicht wird. Hierbei kann das serienmäßige Autoradio als Tuner 4d eingesetzt werden (s. Fig. 7). Auch hier wird in bekannter Weise das frequenzmodulierte ZF-Signal 8d im Diversity-Prozessor 9d auf Empfangsstörungen hin untersucht und es werden Empfangsstörungen durch schnelles Umschalten auf ein ungestörtes Signal vermieden.

Eine besonders vorteilhafte Ausgestaltung der Erfindung besteht darin, daß mehrere FM-Tuner für den frequenzmodulierten UKW-Rundfunk an die jeweiligen Antennenumschalter angeschlossen sind. Auf diese Weise wird es z. B. beim Radioempfang in Omnibussen ermöglicht, daß dem Fahrgast mehrere Radioprogramme über Kopfhörer bei individueller Auswahl des Programms angeboten werden können, wobei jedes Programm für sich durch Antennendiversity weitestgehend störungsfrei beim mobilen Empfang wiedergegeben wird. Die Empfangsverbesserung geschieht dadurch, daß für jedes Radioprogramm ein separater Diversity-Prozessor vorhanden ist, dem das noch nicht begrenzte ZF-Signal zugeführt ist, und daß dann auf an sich bekannte Weise die Empfangsstörungen durch Umschalten auf andere Signale am Antennenumschalter vermieden werden.

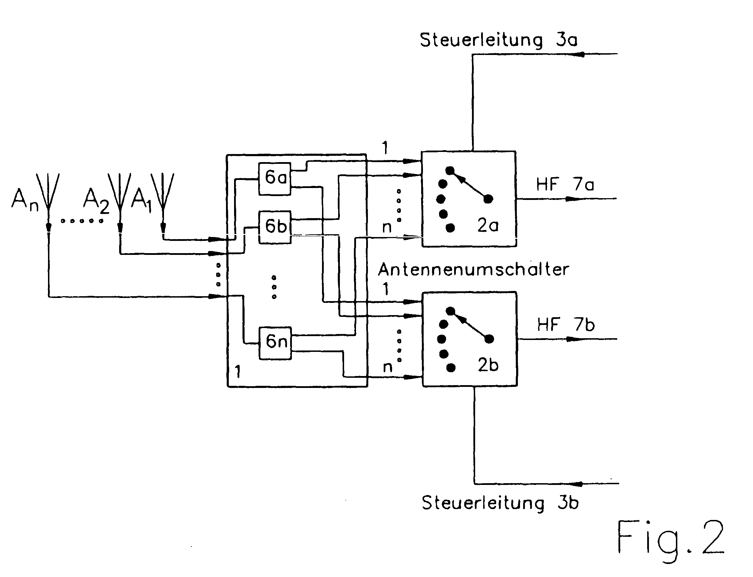

Eine besonders einfache Ausgestaltung der Erfindung besteht darin, die Antennensignale $A_1$ bis $A_n$, die dem Antennenverteiler 1 als Eingangssignale zugeführt sind, im Antennenverteiler 1 mittels passiver Netzwerke 6a bis 6n in gleicher Zahl den Antennenumschaltern 2a und 2b zuzuführen (s. Fig. 2). Die Netzwerke 6a bis 6n haben dabei die Aufgabe, die Antennensignale in ihrer Leistung möglichst gleich auf jeweils zwei Ausgänge aufzuteilen und die jeweiligen beiden Ausgänge möglichst gut voneinander zu entkoppeln, damit der Schaltzustand der Antennenumschalter ausreichend geringe Rückwirkung auf den jeweiligen andern Ausgang besitzt. Diesen Anforderungen werden in hohem Maße z. B. Wilkinsonkoppler gerecht, die durch geeignete Ausführungsformen nach dem Stande der Technik hinreichend breitbandig ausgeführt werden können und die Entkoppeldämpfungen von größer 20 dB aufweisen.

Ein solches passives Netzwerk zur rückwirkungsfreien Signalaufteilung ist jedoch in seinem Aufbau kompliziert, von großem Raumbedarf und teuer in der Herstellung. Deshalb bieten sich unter Inkaufnahme von größeren Signalleistungsverlusten auch Netzwerke zur Signalaufteilung an, die mit Hilfe von Widerständen eine Entkopplung der Ausgänge ermöglichen mit dem Vorteil, neben der einfachen und damit kostengünstigen Realisierung gleichzeitig problemlos die erforderliche Bandbreite abzudecken. Solche asymmetrischen Leistungsteiler weisen meist Entkopplungswerte von 12 dB bei gleichzeitiger Signaldämpfung um 6 dB auf. Der damit verbundene Empfindlichkeitsverlust kann jedoch häufig nicht hingenommen werden.

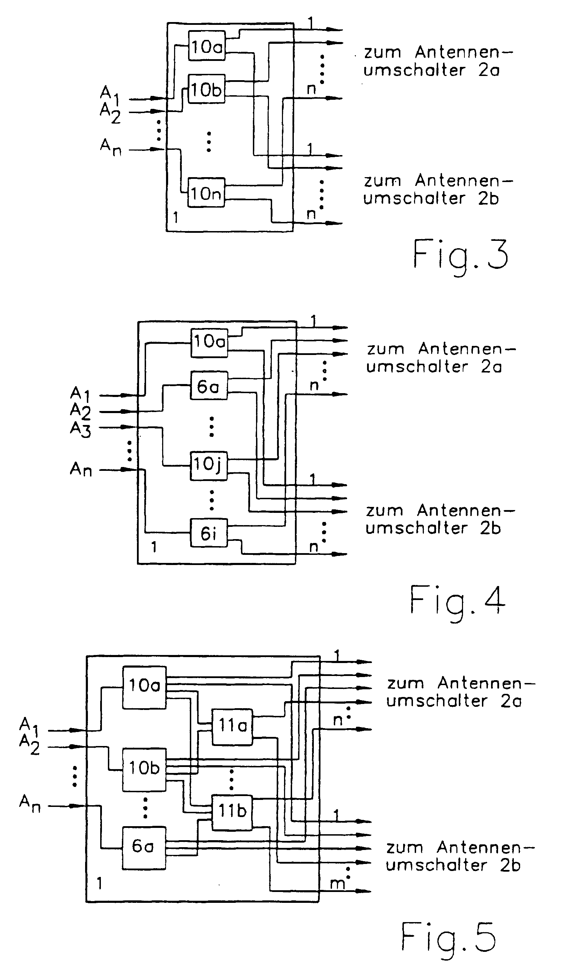

In dieser Hinsicht wesentlich günstigere Verhältnisse liegen vor, wenn die Signalaufteilung im Antennenverteiler 1 mittels aktiver Schaltungen 10a bis 10n erfolgt (s. Fig. 3). Solche hochlinearen und rauscharmen Breitbandschaltungen weisen nach dem Stand der Technik dabei Entkopplungen größer 25 dB bis zu 1 GHz auf. Gleichzeitig erlauben diese aktiven Netzwerke eine Signalanhebung, so daß etwaige Signaldämpfungen, z. B. im Antennenumschalter, ausgeglichen werden können. Zudem kann durch die aktiven Schaltungen der Signalverlust, der zwangsweise bei passiven Leistungsteilern auftritt, durch die innere Verstärkung kompensiert werden.

Für den Antennenverteiler 1 ist aber auch eine Kombination aktiver und passiver Netzwerke sinnvoll (s. Fig. 4), wenn z. B. aktive und passive Antennen am Fahrzeug montiert werden. So können dann die passiven Antennensignale über aktive Signalverteiler 10 den Ant:ennenumschaltern zugeführt werden, um einer weiteren Signalverschlechterung entgegenzuwirken, die sich bei einer Signalaufteilung mittels Widerstandsnetzwerken ergäbe, während die Signale der aktiven Antennen, die durch ihren im Fußpunkt der Antenne angebrachten rauschangepaßten Verstärker bereits eine Verbesserung ihres Signalrauschabstands und eine Pegelanhebung erfahren, mittels passiver Netzwerke 6 kostengünstig auf die Antennenumschalter verteilt werden können.

Umfangreiche Untersuchungen haben gezeigt, daß die durch Mehrwegeausbreitung verursachten Ton- und Bildstörungen beim mobilen Empfang im Meter- und Dezimeterwellenbereich weiter reduziert werden können, wenn zu den Antennensignalen selbst weitere durch Linearkombination der vorhandenen Antennensignale entstandene Signale den Antennenumschaltern zugeführt werden. Hierbei wird, wie in Fig. 5 gezeigt, das Ausgangssignal y einer Schaltung 11 zur Bildung einer Linearkombination durch die Bildungsvorschrift

$$Y = \sum_{i=1}^{n} \underline{a}_i \cdot x_i$$

bestimmt, wobei $x_i$ das i-te Eingangssignal und $\underline{a}_i$ dessen komplexen Linearkoeffizienten darstellt, mit dem dieses Eingangssignal in der Schaltung 11 bewertet wird. Damit neben den Antennensignalen selbst auch die Ausgangssignale der Linearkombinationsschaltungen jeweils den Antennenumschaltern zugeführt werden können, empfiehlt es sich wegen der damit verbundenen größeren Flexibilität, aktive Signalverteiler im Antennenverteiler 1 für die Antennensignale einzusetzen, da diese Signale auch noch den Linearkombinationsschaltungen zugeführt werden müssen. Nur in Ausnahmefällen wird man hier auf passive Signalverteiler zurückgreifen, vor allem dann, wenn man es sich erlauben kann, eine größere Signaldämpfung in Kauf zu nehmen. Bei der Bildung der Linearkombinationen können grundsätzlich alle zur Verfügung stehenden Antennensignale verwendet werden.

Dabei werden die Linearkoeffzienten, die im allgemeinsten Fall komplex sind, nach Betrag und Phase vorgegeben sein. Die Festlegung des Betrages und der Phase der einzelnen Linearkoeffizienten kann dabei durch Testfahrten erfolgen, bei denen die Effizienz am größten ist im Hinblick auf die Empfangsstörungsminimierung.

Eine besonders einfache Form der Linearkombination stellt die Summen- und Differenzbildung aus den Eingangssignalen dar. Hierbei müssen nicht zwangsweise alle Eingangssignale verwendet werden, vielmehr können z. B. nur besonders starke Antennensignale herangezogen werden. Dieses Vorgehen entspricht dann einem Fall, in dem die entsprechenden Linearkoeffizienten der nicht verwendeten Antennensignale zu Null gewählt sind.

Die Zahl der Signale, die den Antennenumschaltern angeboten wird, kann durchaus im Interesse der Aufwandsminimierung unterschiedlich sein. Dies betrifft nicht nur die Anzahl der Schaltungen zur Bildung von Linearkombinationen sondern auch die Zahl der Antennensignale selbst.

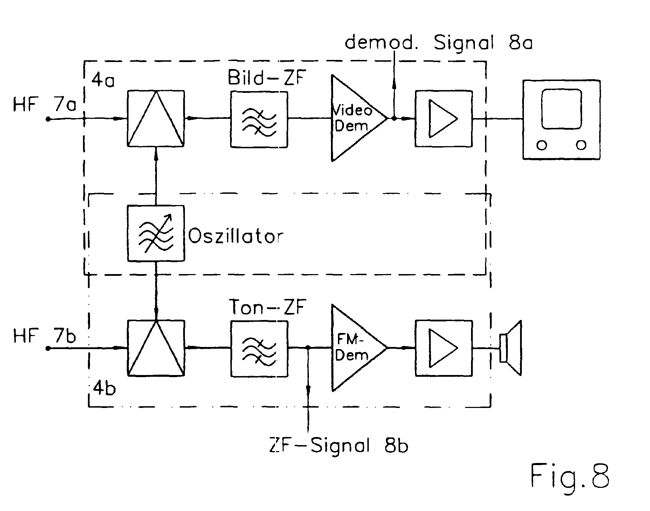

Die Anwendung der Erfindung bringt den weiteren Vorteil mit sich, daß die Verkabelung im Fahrzeug erheblich vereinfacht wird, da lediglich die Koaxialkabel der am Fahrzeug installierten Breitbandantennen zu einem an einem geeigneten Ort anzubringenden Antennenverteiler geführt werden müssen. Zweckmäßigerweise werden am gleichen Einbauort auch die verschiedenen Tuner für die unterschiedlichen Empfangsaufgaben eingebaut und damit reduziert sich der Aufwand für die zusätzlichen Tuner, denn es kann z. B., wie Fig. 8 zeigt, der Bildoszillator des Bildtuners gleichzeitig auch als Oszillator für den Fernsehtontuner verwendet werden, wenn die Signalauswertung auf der Ton-ZF von 33.4 MHz im zugeordneten Diversity-Prozessor erfolgt.

Wird durch einen weiteren Festoszillator dieses Signal auf z. B. 10.7 MHz umgesetzt, könnte dann z. B. dieses frequenzmodulierte Fernsehtonsignal auf die Radio-ZF von 10.7 MHz eines zum UKW-Diversityempfang vorhandenen Radios geschaltet werden und die Tonwiedergabeeinrichtung dieses Radios würde auch für die Tonwiedergabe des Fernsehtons verwendet werden Können. Damit könnte auch der ursprünglich nur zum UKW-Diversityempfang verwendete Diversity-Prozessor auch zum Diversityempfang des Fernsehtons verwendet werden, wobei dann die Steuerleitung, die aus dem Diversity-Prozessor führt, mit dem Antennenumschalter zum Empfang des Fernsehtons verbunden wird. Im Falle des Radioempfangs wäre diese Steuerleitung mit dem Antennenumschalter zum Empfang des UKW-Rundfunks verbunden. Durch diese Doppelnutzung des Radios und des zugeordneten Diversity-Prozessors wird der technische Aufwand erheblich reduziert.

In Fernsehempfängern für den Heimempfang wird üblicherweise das Fernsehtonsignal erst nach der Demodulation des Bildsignals demoduliert auf der Frequenz von 5.5 MHz. Selbstverständlich kann bei einer erfindungsgemäßen Antennendiversity-Anlage die Signalbewertung des Fernsehtons im Diversity-Prozessor auch auf dieser Frequenz erfolgen.

## Patentansprüche

1.    Antennendiversity-Anlage mit mindestens zwei Antennen (A1, A2) für den mobilen Empfang von Meter- und Dezimeterwellen, bestehend aus einem Antennenverteiler (1) mit einem Satz von Eingängen und einem Satz von Ausgängen, dessen Eingängen die Antennensignale zugeführt sind und dessen Ausgangssignale einem Antennenumschalter (2a) zugeführt sind, und einem ersten Tuner (4a) für den Fernsehbildempfang, dem vom Antennenumschalter (2a) das ausgewählte HF-Signal zugeführt ist, wobei der Tuner (4a) einen Ausgang besitzt, der das ZF-Signal oder das demodulierte Signal (8a) führt und der mit einem Diversity-Prozessor (9a) verbunden ist, in welchem eine Signalbewertung durchgeführt wird, von deren Ergebnis es abhängt, ob über eine vom Diversity-Prozessor (9a) zum Antennenumschalter (2a) führende Steuerleitung (3a) der Antennenumschalter (2a) veranlaßt wird, ein günstigeres Eingangssignal zu seinem Ausgang durchzuschalten,
**dadurch gekennzeichnet**, daß

der Antennenverteiler (1) mindestens einen weiteren Satz von Ausgängen aufweist, jeder weitere Satz von Ausgängen mit einem eigenen Antennenumschalter (2b) verbunden ist, dessen Ausgang jeweils mit einem eigenen weiteren Tuner (4b) in Verbindung steht, wobei einer der weiteren Tuner (4b) für den Empfang des dem Fernsehbild zugeordneten Fernsehtons angepasst ist und einen Ausgang besitzt, der das ZF-Signal oder das demodulierte Signal (8b) zu einem diesem Tuner (4b) zugeordneten Diversity-Prozessor (9b) führt, der eine dem zugeordneten Tuner (4b) angepaßte Signalbewertung durchführt, auf Grund derer über eine Steuerleitung (3b) der zugeordnete Antennenumschalter (2b) so gesteuert wird, daß er ein günstigeres Eingangssignal zu seinem Ausgang durchschaltet.

2.  Antennendiversity-Anlage nach Anspruch 1,
    **dadurch gekennzeichnet,** daß
    der Antennenverteiler (1) insgesamt zwei Sätze von Ausgängen (1...n, 1...m) aufweist, wobei der mit dem einen Satz von Ausgängen über seinen Antennenumschalter (2a) in Verbindung stehende erste Tuner (4a) das Fernsehbild eines Fernsehkanals empfängt, während der mit dem anderen Satz von Ausgängen über seinen Antennenumschalter (2b) in Verbindung stehende weitere Tuner (4b) den dazugehörigen Fernsehton empfängt.

3.  Antennendiversity-Anlage nach Anspruch 2,
    **dadurch gekennzeichnet**, daß
    der das Fernsehbild empfangende erste Tuner (4a) an seinem Ausgang das demodulierte Signal (8a) und der den Fernsehton empfangende weitere Tuner (4b) an seinem Ausgang das noch nicht begrenzte ZF-Tonsignal (8b) führt.

4.  Antennendiversity-Anlage nach Anspruch 1,
    **dadurch gekennzeichnet**, daß
    der Antennenverteiler (1) insgesamt drei Sätze von Ausgängen (1...n; 1...m; 1...o) aufweist, wobei der mit dem einen Satz von Ausgängen über seinen Antennenumschalter (2a) in Verbindung stehende erste Tuner (4a) das Fernsehbild eines Fernsehkanals empfängt, während die mit den beiden anderen Sätzen von Ausgängen über je einen Antennenumschalter (2b bzw. 2c) in Verbindung stehenden weiteren Tuner (4b bzw. 4c) jeweils eines der beiden frequenzmäßig getrennten HF-Signale des Stereofernsehtons oder des Zweikanaltons empfangen.

5.  Antennendiversity-Anlage nach einem der Ansprüche 2 bis 4,
    **dadurch gekennzeichnet**, daß
    der Antennenverteiler (1) noch mindestens einen weiteren Satz von Ausgängen (1...p) aufweist, der jeweils über einen Antennenumschalter (2d) mit einem der weiteren Tuner (4d) für den Empfang des frequenzmodulierten Rundfunks verbunden ist.

6.  Antennendiversity-Anlage nach einem der Ansprüche 2 bis 5,
    **dadurch gekennzeichnet,** daß
    das Oszillatorsignal des das Fernsehbild empfangenden ersten Tuners (4a) auch das Oszillatorsignal des den Fernsehton empfangenden weiteren Tuners (4b) ist.

7.  Antennendiversity-Anlage nach Anspruch 1,
    **dadurch gekennzeichnet,** daß
    mindestens einige Tuner FM-Tuner sind, von denen mindestens einer für den Empfang eines frequenzmodulierten Rundfunkkanals und mindestens einer für den Empfang eines frequenzmodulierten Fernsehtons dient.

8.  Antennendiversity-Anlage nach Anspruch 7,
    **dadurch gekennzeichnet,** daß
    die genannten FM-Tuner an ihrem Ausgang das noch nicht begrenzte ZF-Signal dem zugeordneten Diversity-Prozessor (9a,b,c) zuführen.

9.  Antennendiversity-Anlage nach Anspruch 8,
    **dadurch gekennzeichnet,** daß
    die Signalbewertung in den Diversity-Prozessoren (9a,b,c) durch die Koinzidenz von Amplitudeneinbrüchen und Störfrequenzhubspitzen des noch nicht begrenzten ZF-Signals erfolgt.

10. Antennendiversity-Anlage nach einem der Ansprüche 7 bis 9,
    **dadurch gekennzeichnet**, daß
    die Signalbewertung in den Diversity-Prozessoren (9a,b,c) beim Empfang des frequenzmodulierten Fernsehtons auf den standardisierten Ton-ZF-Frequenzen 33.4 MHz, 10.7 MHz oder 5.5 MHz erfolgt.

**11.** Antennendiversity-Anlage nach einem der Ansprüche 2 bis 6,
**dadurch gekennzeichnet,** daß
im Diversity-Prozessor (9a), der dem das Fernsehbild empfangenden ersten Tuner (4a) zugeordnet ist, die Signalbewertung während einer horizontalen oder vertikalen Austastzeit des demodulierten Bildsignals erfolgt.

**12.** Antennendiversity-Anlage nach einem der Ansprüche 1 bis 11,
**dadurch gekennzeichnet,** daß
im Antennenverteiler (1) alle Antennensignale mittels passiver Netzwerke (6a, 6b 6n) auf die Eingänge der Antennenumschalter (2a, 2b) verteilt werden.

**13.** Antennendiversity-Anlage nach einem der Ansprüche 1 bis 11,
**dadurch gekennzeichnet**, daß
im Antennenverteiler (1) alle Antennensignale mittels aktiver Schaltungen (10a, 10b, ..., 10n) auf die Eingänge der Antennenumschalter (2a, 2b) verteilt werden.

**14.** Antennendiversity-Anlage nach einem der Ansprüche 1 bis 11,
**dadurch gekennzeichnet**, daß
im Antennenverteiler (1) ein Teil der Antennensignale mittels passiver Netzwerke (6a, 6b ..., 6i) und die restlichen Antennensignale mittels aktiver Schaltungen (10a, 10b, ..., 10j) auf die Eingänge der Antennenumschalter verteilt werden.

**15.** Antennendiversity-Anlage nach einem der Ansprüche 1 bis 14,
**dadurch gekennzeichnet,** daß
im Antennenverteiler (1) Schaltungen (11a,b) vorhanden sind, in denen Linearkombinationen aus den Antennensignalen gebildet werden und die Ausgangssignale dieser Schaltungen (11a,b) zusätzlich zu den Antennensignalen den Antennenumschaltern zugeführt werden.

**16.** Antennendiversity-Anlage nach Anspruch 15,
**dadurch gekennzeichnet**, daß
die Koeffizienten der Linearkombinationen nach Betrag und Phase festgelegt sind.

**17.** Antennendiversity-Anlage nach Anspruch 15,
**dadurch gekennzeichnet**, daß
ein oder mehrere Koeffizienten einer Linearkombination zu Null gewählt sind.

**18.** Antennendiversity-Anlage nach einem der Ansprüche 1 bis 17,
**dadurch gekennzeichnet,** daß
die Zahl der den Antennenumschaltern zugeführten Signale je Antennenumschalter (2a, 2b) unterschiedlich ist.

**19.** Antennendiversity-Anlage nach dem auf einen der Ansprüche 15 bis 17 rückbezogenen Anspruch 18,
**dadurch gekennzeichnet,** daß
sowohl die Zahl der zugeführten Antennensignale als auch die Zahl der zugeführten Ausgangssignale der Schaltungen (11a,b), in denen Linearkombinationen gebildet werden, unterschiedlich ist.

**Claims**

**1.** Antenna diversity system comprising at least two antennae (A1, A2) for the mobile reception of meter and decimeter waves, consisting of an antenna distributor (1 ) having a set of inputs and a set of outputs, to the inputs of said antenna distributor are transmitted the antenna signals and the output signals of said antenna distributor are transmitted to an antenna duplexer (2a), and consisting of a first tuner (4a) for the reception of television pictures, to which the selected HF signal is transmitted from the antenna duplexer (2a), wherein the tuner (4a) has an output which guides the IF signal or the demodulated signal (8a) and which is connected to a diversity processor (9a), in which a signal evaluation process is performed, the result of which determines whether a control line (3a) which leads from the diversity processor (9a) to the antenna duplexer (2a) causes the antenna duplexer (2a) to switch through a more favourable input signal to its output, characterised in that the antenna distributor (1) comprises at least one further set of outputs, each further set of outputs being connected to a dedicated antenna duplexer (2b), the output of which is connected in each case to a dedicated further tuner (4b), wherein one of the further tuners (4b) is adapted for the reception of the television sound associated with the television pictures and has an output which guides the IF signal or the demodulated signal (8b) to a diversity processor (9b) which is allocated to this tuner (4b) and performs a signal evaluation process which is tailored to suit the allocated tuner (4b) and owing to which signal evaluation process the allocated antenna duplexer (2b) is controlled by way of a control line (3b) in such a manner that said duplexer switches through a more favourable input signal to its output.

2. Antenna diversity system according to claim 1, characterised in that the antenna distributor (1) comprises of total of two sets of outputs (1...n, 1...m), wherein the first tuner (4a) which is connected to the one set of outputs by way of its antenna duplexer (2a) receives the television picture of a television channel, whereas the further tuner (4b) which is connected to the other set of outputs by way of its antenna duplexer (2b) receives the associated television sound.

3. Antenna diversity system according to claim 2, characterised in that the first tuner (4a), which receives the television picture, guides at its output the demodulated signal (8a) and the further tuner (4b), which receives the television sound, guides at its output the as yet unlimited IF tone signal (8b).

4. Antenna diversity system according to claim 1, characterised in that the antenna distributor (1) comprises a total of three sets of outputs (1...n; 1...m; 1...o), wherein the first tuner (4a) which is connected to the one set of outputs by way of its antenna duplexer (2a) receives the television picture of a television channel, whereas the further tuners (4b and 4c) which are connected to the other two sets of outputs in each case by way of an antenna duplexer (2b and 2c) each receive one of the two frequency separated HF signals of the stereophonic television sound or of the dual channel sound.

5. Antenna diversity system according to any one of the claims 2 to 4, characterised in that the antenna distributor (1) also comprises at least one further set of outputs (1 ...p) which is connected in each case by way of an antenna duplexer (2d) to one of the further tuners (4d) for the purpose of receiving frequency modulated radio broadcasting.

6. Antenna diversity system according to any one of the claims 2 to 5, characterised in that the oscillator signal of the first tuner (4a) which receives the television picture is also the oscillator signal of the further tuner (4b) which receives the television sound.

7. Antenna diversity system according to claim 1, characterised in that at least some of the tuners are FM tuners, of which at least one is used to receive a frequency modulated radio broadcasting channel and at least one is used to receive frequency modulated television sound.

8. Antenna diversity system according to claim 7, characterised in that the said FM tuners transmit at their output the as yet unlimited IF signal to the allocated diversity processor (9a, b, c).

9. Antenna diversity system according to claim 8, characterised in that the signal evaluation process is performed in the diversity processors (9a, b, c) by virtue of the coincidence of amplitude troughs and interference frequency swing peaks of the as yet unlimited IF signal.

10. Antenna diversity system according to any one of the claims 7 to 9, characterised in that the signal evaluation process is performed in the diversity processors (9a, b, c) upon the frequency modulated television sound being received on the standardised IF-audio-frequencies 33.4 MHZ, 10.7 MHZ or 5.5 MHZ.

11. Antenna diversity system according to any one of the claims 2 to 6, characterised in that the signal evaluation process is performed in the diversity processor (9a), which is allocated to the first tuner (4a) receiving the television picture, during a horizontal or vertical blanking period of the demodulated picture signal.

12. Antenna diversity system according to any one of the claims 1 to 11, characterised in that in the antenna distributor (1) all antenna signals are distributed by means of passive networks (6a, 6b, ..., 6n) to the inputs of the antenna duplexers (2a, 2b).

13. Antenna diversity system according to any one of the claims 1 to 11, characterised in that in the antenna distributor (1) all antenna signals are distributed by means of active circuits (10a, 10b, ..., 10n) to the inputs of the antenna duplexers (2a, 2b).

**14.** Antenna diversity system according to any one of the claims 1 to 11, characterised in that in the antenna distributor (1) some of the antenna signals are distributed by means of passive networks (6a, 6b, ..., 6i) and the remaining antenna signals are distributed by means of active circuits (10a, 10b, ..., 10j) to the inputs of the antenna duplexers.

**15.** Antenna diversity system according to any one of the claims 1 to 14, characterised in that in the antenna distributor (1) there are provided circuits (11a, b) in which linear combinations are formed from the antenna signals and the output signals of these circuits (11a, b) in addition to the antenna signals are transmitted to the antenna duplexers.

**16.** Antenna diversity system according to claim 15, characterised in that the coefficients of the linear combinations are fixed according to value and phase.

**17.** Antenna diversity system according to claim 15, characterised in that one or more coefficients of a linear combination are selected to be zero.

**18.** Antenna diversity system according to any one of the claims 1 to 17, characterised in that the number of signals, which are transmitted to the antenna duplexers, varies per antenna duplexer (2a, 2b).

**19.** Antenna diversity system according to claim 18, when dependent upon any one of the claims 15 to 17, characterised in that the number of transmitted signals and the number of transmitted output signals of the circuits (11a, b), in which linear combinations are formed, are different.

**Revendications**

**1.** Installation à choix d'antenne avec au moins deux antennes (A1, A2) pour la réception mobile d'ondes métriques et décimétriques, constituée d'un multicoupleur d'antenne (1) avec un groupe d'entrées et un groupe de sorties, dont les entrées reçoivent les signaux d'antenne et dont les signaux de sortie sont envoyés à un commutateur d'antenne (2a), et avec un premier tuner (4a) pour la réception d'images de télévision, auquel le commutateur d'antenne (2a) envoie le signal à haute fréquence sélectionné, le tuner (4a) ayant une sortie qui conduit le signal à fréquence intermédiaire ou le signal démodulé (8a) et qui est reliée à un processeur de choix (9a) dans lequel est effectuée une évaluation de signal dont le résultat détermine si le commutateur d'antenne (2a) est commandé par l'intermédiaire d'une ligne de commande (3a) conduisant du processeur de choix (9a) au commutateur d'antenne (2a) de manière à commuter un meilleur signal d'entrée à sa sortie,
caractérisée en ce que
le multicoupleur d'antenne (1) comporte au moins un autre groupe de sorties, chaque autre groupe de sorties est relié à un commutateur d'antenne (2b) particulier dont la sortie est en liaison à chaque fois avec un autre tuner (4b) particulier où l'un des autres tuners (4b) est adapté pour la réception du son de télévision associé à l'image de télévision et dont une sortie conduit le signal à fréquence intermédiaire ou le signal démodulé (8b) à un processeur de choix (9b) qui est associé à ce tuner (4b) et effectue une évaluation de signal adaptée au tuner (4b) associé, évaluation sur la base de laquelle le commutateur d'antenne (2b) associé est commandé par l'intermédiaire d'une ligne de commande (3b) de telle sorte qu'il commute un meilleur signal d'entrée à sa sortie.

**2.** Installation à choix d'antenne selon la revendication 1,
caractérisée en ce que
le multicoupleur d'antenne (1) comporte au total deux groupes de sorties (1...n, 1 ... m), le premier tuner (4a) en liaison avec un groupe de sorties par l'intermédiaire de son commutateur d'antenne (2a) recevant l'image de télévision d'un canal de télévision tandis que l'autre tuner (4b) en liaison avec l'autre groupe de sorties par l'intermédiaire de son commutateur d'antenne (2b) reçoit le son de télévision associé.

**3.** Installation à choix d'antenne selon la revendication 2,
caractérisée en ce que
le premier tuner (4a) recevant l'image de télévision conduit à sa sortie le signal démodulé (8a) et l'autre tuner (4b) recevant le son de télévision conduit à sa sortie le signal audio à fréquence intermédiaire (8b) non encore limité.

**4.** Installation à choix d'antenne selon la revendication 1,
caractérisée en ce que

le multicoupleur d'antenne (1) comporte au total trois groupes de sorties (1 ... n ; 1 ... m ; 1 ... o), le premier tuner (4a) en liaison avec un groupe de sorties par l'intermédiaire de son commutateur d'antenne (2a) recevant l'image de télévision d'un canal de télévision tandis que les autres tuners (4b et 4c) en liaison avec les deux autres groupes de sorties à chaque fois par l'intermédiaire d'un commutateur d'antenne (2b et 2c) reçoivent respectivement un des deux signaux à haute fréquence, séparés par la fréquence, du son stéréo de la télévision ou du son à deux canaux.

5. Installation à choix d'antenne selon l'une des revendications 2 à 4,
   caractérisée en ce que
   le multicoupleur d'antenne (1) comporte encore au moins un autre groupe de sorties (1 ... p) qui est relié à chaque fois par l'intermédiaire d'un commutateur d'antenne (2d) à un des autres tuners (4d) pour la réception du signal radio modulé en fréquence.

6. Installation à choix d'antenne selon l'une des revendications 2 à 5,
   caractérisée en ce que
   le signal d'oscillateur du premier tuner (4a) recevant l'image de télévision est aussi le signal d'oscillateur de l'autre tuner (4b) recevant le son de télévision.

7. Installation à choix d'antenne selon la revendication 1,
   caractérisée en ce que
   au moins quelques tuners sont des tuners en modulation de fréquence parmi lesquels au moins l'un sert à la réception d'un canal radio à modulation de fréquence et au moins l'un sert à la réception d'un son de télévision à modulation de fréquence.

8. Installation à choix d'antenne selon la revendication 7,
   caractérisée en ce que
   lesdits tuners en modulation de fréquence envoient à leur sortie le signal à fréquence intermédiaire non encore limité vers le processeur de choix (9a, b, c) associé.

9. Installation à choix d'antenne selon la revendication 8,
   caractérisée en ce que
   l'évaluation de signal dans les processeurs de choix (9a, b, c) s'effectue par la coïncidence de chutes d'amplitudes et de pointes de fréquences parasites du signal à fréquence intermédiaire non encore limité.

10. Installation à choix d'antenne selon l'une des revendications 7 à 9,
    caractérisée en ce que
    l'évaluation de signal dans les processeurs de choix (9a, b, c) s'effectue lors de la réception du son de télévision modulé en fréquence sur les fréquences intermédiaires audio standardisées 33,4 MHz, 10,7 MHz ou 5,5 MHz.

11. Installation à choix d'antenne selon l'une des revendications 2 à 6,
    caractérisée en ce que
    dans le processeur de choix (9a) qui est associé au premier tuner (4a) recevant l'image de télévision, l'évaluation de signal s'effectue pendant un temps de suppression horizontale ou verticale du signal vidéo démodulé.

12. Installation à choix d'antenne selon l'une des revendications 1 à 11,
    caractérisée en ce que
    dans le multicoupleur d'antenne (1), tous les signaux d'antennes sont distribués au moyen de réseaux passifs (6a, 6b, ..., 6n) sur les entrées des commutateurs d'antenne (2a, 2b).

13. Installation à choix d'antenne selon l'une des revendications 1 à 11,
    caractérisée en ce que
    dans le multicoupleur d'antenne (1), tous les signaux d'antennes sont distribués au moyen de circuits actifs (10a, 10b, .... 10n) sur les entrées des commutateurs d'antenne (2a, 2b).

14. Installation à choix d'antenne selon l'une des revendications 1 à 11,
    caractérisée en ce que
    dans le multicoupleur d'antenne (1), une partie des signaux d'antenne sont distribués sur les entrées des commutateurs d'antenne au moyen de réseaux passifs (6a, 6b, .... 6i) et les autres signaux d'antenne au moyen de circuits actifs (10a, 10b, .... 10j).

15. Installation à choix d'antenne selon l'une des revendications 1 à 14,
    caractérisée en ce que
    il y a dans le multicoupleur d'antenne (1) des circuits (11a, b) dans lesquels des combinaisons linéaires sont formées à partir des signaux d'antenne et les signaux de sortie de ces circuits (11a, b) sont envoyés en plus des signaux d'antenne aux commutateurs d'antenne.

16. Installation à choix d'antenne selon la revendication 15,
    caractérisée en ce que
    les coefficients des combinaisons linéaires sont fixés en amplitude et en phase.

17. Installation à choix d'antenne selon la revendication 15,
    caractérisée en ce que
    un ou plusieurs coefficients d'une combinaison linéaire sont choisis égaux à zéro.

18. Installation à choix d'antenne selon 1 une des revendications 1 à 17,
    caractérisée en ce que
    le nombre des signaux envoyés aux commutateurs d'antenne est différent pour chaque commutateur d'antenne (2a, 2b).

19. Installation à choix d'antenne selon l'une des revendications 15 à 17 en relation avec la revendication 18,
    caractérisée en ce que
    le nombre des signaux d'antenne envoyés ainsi que le nombre des signaux de sortie envoyés des circuits (11a, b), dans lesquels des combinaisons linéaires sont formées, sont différents.

Fig.1

EP 0 521 123 B2

Fig. 2

zum Antennenumschalter 2a

zum Antennenumschalter 2b

Fig. 3

zum Antennenumschalter 2a

zum Antennenumschalter 2b

Fig. 4

zum Antennenumschalter 2a

zum Antennenumschalter 2b

Fig. 5

Steuerleitung 3a

9a

demod. Signal 8a

1

HF 7a

2a

4a

Antennenumschalter

$A_N$ ....2 $A_2$ $A_1$

Antennen Verteiler

1

HF 7b

2b

4b

R

m

ZF—Signal 8b

9b

Steuerleitung 3b

Antennenumschalter

1

HF 7c

2c

4c

L

o

ZF—Signal 8c

9c

Steuerleitung 3c

Fig. 6

Steuerleitung 3a

9a

demod. Signal 8a

1

2a

HF 7a

4a

n

Antennenumschalter

1

2b

HF 7b

4b

R

m

ZF—Signal 8b

9b

Steuerleitung 3b

A_N ..... A_2 A_1

Antennen Verteiler

1

2c

HF 7c

4c

L

o

ZF—Signal 8c

9c

Steuerleitung 3c

Antennenumschalter

1

2d

HF 7d

4d

UKW

p

ZF—Signal 8d

1

9d

Steuerleitung 3d

Fig. 7

Fig.8